# EUROPEAN PATENT APPLICATION

(11) **EP 2 450 564 A1**
(43) Date of publication of application: **09.05.2012**
(21) Application number: 11160421.1
(22) Date of filing: 30.03.2011
(51) Int. Cl.: F03D 5/06

(54) **System for generating energy from a fluid flow**

(30) Priority: 03.11.2010 IT MI20102039
(71) Applicant: ZanettiStudios S.r.l., 20122 Milano (IT)
(72) Inventor: Zanetti, Giancarlo, I-20122, Milano (IT)
(74) Representative: Pezzoli, Ennio

(57) **Abstract**

A system for generating energy (100) from a fluid flow (105) is proposed. The system includes energy conversion means (110), aerostatic means (130a, 130b) - switchable between an active condition for being carried away from the energy conversion means by the fluid flow, and a passive condition in which said carrying away is minimized - and connection means (120, 125a, 125b, 125c, 125d) for connecting the aerostatic means with the energy conversion means. The energy conversion means converts part of a kinetic energy, supplied to the aerostatic means by the fluid flow, into said energy when the aerostatic means in the active condition is carried away from the energy conversion means. The system also includes return means (110) for returning the aerostatic means in the passive condition towards the energy conversion means, and switching means (200) for switching the aerostatic means from the passive condition to the active condition and from the active condition to the passive condition in response to the reaching a first distance (Ls) and a second distance (Lf), respectively, of the aerostatic means from the energy conversion means - the second distance being greater than the first distance. In the solution according to an embodiment of the present the invention the aerostatic means includes at least one pair of aerostatic modules (130a, 130b). Furthermore, the switching means includes coupling means (145, 215) for coupling the aerostatic modules of each pair for forming a first resistance surface (150) for the fluid flow in the active condition and for decoupling the aerostatic modules of each pair for forming a second resistance surface for the fluid flow smaller than the first surface in the passive condition.

## Description

The solution according to one or more embodiments of the present invention relates to the field of energy generation. More specifically, this solution relates to the generation of energy from a fluid flow.

In the art a plurality of energy generating systems - or simply generators - are known that produce useful energy (*e.g*., of electrical type) by converting another form of energy. In particular, in recent years there has been a great development in the generators based on renewable energy sources.

In more detail, various types of generators have been developed that are able to convert kinetic energy of a fluid flow (*e.g*., wind and oceanic currents). Considering for exemplary purpose windpower generators, there are two main generator types. A first type consists in big turbines installed on pillars; the fluid flow imparts a rotary motion to the blades of a turbine from which electric energy is generated. A second type of windpower generators includes parachute-based generators.

In general, the parachute generators may be switched between a closed condition and an open condition (during which they are moved by the fluid flow). Moreover, an aerostatic balloon may be provided for maintaining the parachute at a working altitude. The parachute and the aerostatic balloon are connected by a cable to an energy converter placed on the ground. The parachute is opened and closed alternately. When opened, the parachute is carried away from the energy converter by the force of the fluid flow (allowing the energy converter to generate energy). The parachute is then closed and returned close to the energy converter (using a fraction of the generated energy) to be opened and closed again cyclically.

There are also parachute generators with double section (each including a parachute and an aerostatic balloon), in which the sections are connected by a single cable that passes through an alternating-type converter. In this case, the parachutes are opened and closed alternately. When a first parachute is opened it is carried away from the energy converter by the force of the fluid flow (such as to generate useful energy). At the same time, a second parachute is closed and is returned near to the energy converter by the first parachute (without using the useful energy produced by the energy converter).

The above-mentioned generators have a very low environmental impact, are simple, reliable and require very low maintenance; these qualities make the generators very cheap, but at the same time with excellent energy efficiency. In the case of parachute windpower generators, indeed, it is possible to exploit high-altitude winds. As it is known the wind speed increases moving away from the ground; for example, at 800 m above ground level the wind has an average speed of 6-10 m/s for about 5000-7000 hours per year (compared to 4-5 m/s for 2000-4000 hours per year at an altitude of 80 m above ground level, *i.e*. the working altitude of the turbine windpower generators).

However, such parachute windpower generators are affected by a problem related to the switching between opening and closing of the parachute. In fact, this requires a non-negligible amount of energy as it has to be performed in opposition to the wind flow.

In the known art this problem was solved by equipping the guide wires for controlling the opening and closing of the parachute directly from the ground. This solution has the disadvantage of being complex and prone to failures even in the simple case of twisting of the guide wires.

It is possible to equip the parachute with a motor, but this would be able to generate a high intensity torque in order to open/close the parachute in opposition to the wind strength, and therefore with a heavy weight (thereby reducing the conversion efficiency) and it would require a power supplied from the ground provided, for example, by a power wire, which would make the system very dangerous in the event of a breaking thereof.

A problem associated with dual systems section relates to the possibility of entanglement between the two cables. When such entanglement occurs (*e.g*., due to strong turbulences) the parachutes should be brought to the ground and released, which task is complex and of long duration (for preventing damages to the parachutes and to the switching means).

A solution that solves at least partly the above mentioned problems is disclosed in the international patent application WO 2010/015720 of the same Applicant, in which a system for generating energy from a fluid flow is described, where a pair of parachute means, each independently switchable between an active condition and a passive condition, is able to slide along the connection means. During the operation, the parachute means of the pair switch between their active condition and passive condition in phase opposition with each other; the parachute means in the active condition cause the parachute means in the passive condition to slide along the connection means until a stable position.

In general terms, the solution according to embodiments of the present invention is based on the idea of replacing the parachute with aerostatic means capable of switching between an active condition to a passive condition with a low energy contribution.

In particular, one or more aspects of the solution according to specific embodiments of the invention are set out in the independent claims, with advantageous features of the same solution that are set out in the dependent claims (whose wording is herein incorporated *verbatim* by reference).

More specifically, one aspect of a solution according to an embodiment of the invention provides a system for generating energy from a fluid flow. The system includes energy conversion means, aerostatic means - switchable between an active condition for being carried away from the energy conversion means by the fluid flow, and a passive condition in which said carrying away is minimized - and connection means for connecting the aerostatic means with the energy conversion means. The energy conversion means convert part of a kinetic energy supplied to the aerostatic means by the fluid flow into said energy when the aerostatic means in the active condition is carried away from the energy conversion means. The system also includes return means for returning the aerostatic means in the passive condition towards the energy conversion means, and switching means for switching the aerostatic means from the passive condition to the active condition and from the active condition to the passive condition in response to the reaching a first distance and a second distance, respectively, of the aerostatic means from the energy conversion means - the second distance being greater than the first distance. In the solution according to an embodiment of the present the invention the aerostatic means includes at least one pair of aerostatic modules. Furthermore, the switching means includes coupling means for coupling the aerostatic modules of each pair for forming a first resistance surface for the fluid flow in the active condition and for decoupling the aerostatic modules of each pair for forming a second resistance surface for the fluid flow smaller than the first surface in the passive condition.

Another aspect of a solution according to an embodiment of the invention provides a corresponding method (with the same advantageous features recited in the dependent claims for the system that apply *mutatis mutandis* to the method).

A solution according to one or more embodiments of the invention, as well as additional features and its advantages will be better understood with reference to the following detailed description of an embodiment thereof, given purely by way of a non-restrictive indication and without limitation, to be read in conjunction with the attached figures (wherein corresponding elements are denoted with equal or similar references and their explanation is not repeated for the sake of brevity). In this respect, it is expressly understood that the figures are not necessarily drawn to scale (with some details that may be exaggerated and/or simplified) and that, unless otherwise specified, they are simply intended to conceptually illustrate the structures and procedures described herein. In particular:
FIG.1A shows a generator according to an embodiment of the present invention in a passive condition;
FIG.1B shows the generator of FIG.1A during a switching between the passive condition and an active condition;
FIG.1C shows the generator of FIG.1A in an active condition in which kinetic energy is converted into a useful form of energy;
FIG.1D shows the generator of FIG.1 in a passive condition in which a coupling cable is wound;
FIG.2A shows a top view of a pair of aerostatic modules and of switching means connected thereto according to an embodiment of the present invention in the passive condition; and
FIG.2B shows a top view of the pair of aerostatic modules and of the switching means connected thereto according to an embodiment of the present invention in the active condition.

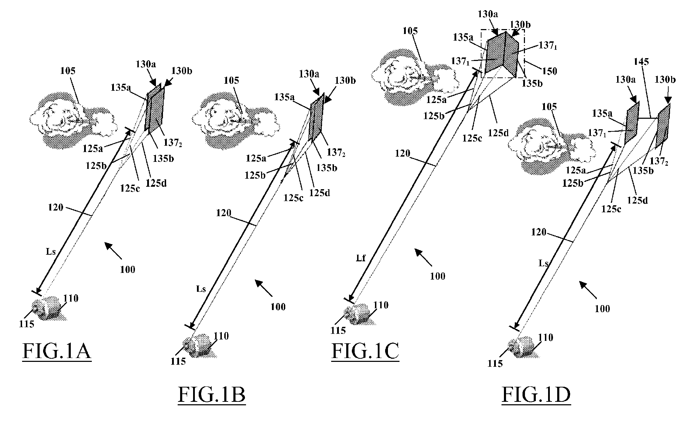

With reference to FIGs.1A-1D, there is shown a system for generating energy, or more simply referred to as generator 100, adapted to generate a useful form of energy - such as electric energy - from a kinetic energy of a fluid flow, for example, wind pictorially shown in the figures and indicated by the reference 105. The generator 100 is constrained to the ground and includes energy conversion means, such as a converter 110 capable of generating electric energy by a rotation of its shaft 115. Furthermore, the converter 110 includes recovering means, such as an electric winding engine (embedded in the converter and not shown in the figures) adapted to use a portion of the electric energy produced by the converter 110 to counter-rotate the shaft 115 in order to wind up connection means, such as a connection cable 120.

The connection cable 120, for example, made of metal and/or plastic cords, is connected to an end to the shaft 115 of the converter 110, while an opposite end is divided into four terminal segments 125a, 125b, 125c, 125d. The terminal segments 125a, 125b, 125c, 125d are connected in pairs to two aerostatic modules 130a and 130b. In particular, the segment pair 125a and 125b is connected to the aerostatic module 130a along a connecting edge 135a thereof; similarly, the segment pair 125c and 125d is connected to the aerostatic module 130b along a connecting edge 135b thereof.

Each aerostatic module 130a,130b is formed preferably, although not necessarily, as a panel of substantially rectangular shape. Therefore each aerostatic module 130a,130b has a main internal face 137₁ and a main external face 137₂, opposite top each other and having a surface substantially greater than the remaining faces. Furthermore, each aerostatic module 130a,130b is provided with a coupling edge 140a,140b opposite to the abovementioned connecting edge 135a,135b. In particular, the coupling edges 140a and 140b are formed to match when brought close to each other. Finally, the aerostatic modules 130a and 130b are adapted to hold inside them a gas lighter than the air (*e.g*., the helium element He), in an amount such as to ensure a floating of the aerostatic modules 130a and 130b at a working altitude (*e.g*., about 800m above the ground).

The generator 100 also includes a coupling cable 145 connecting the coupling edges 140a and 140b of the aerostatic modules 130a and 130b, respectively, together.

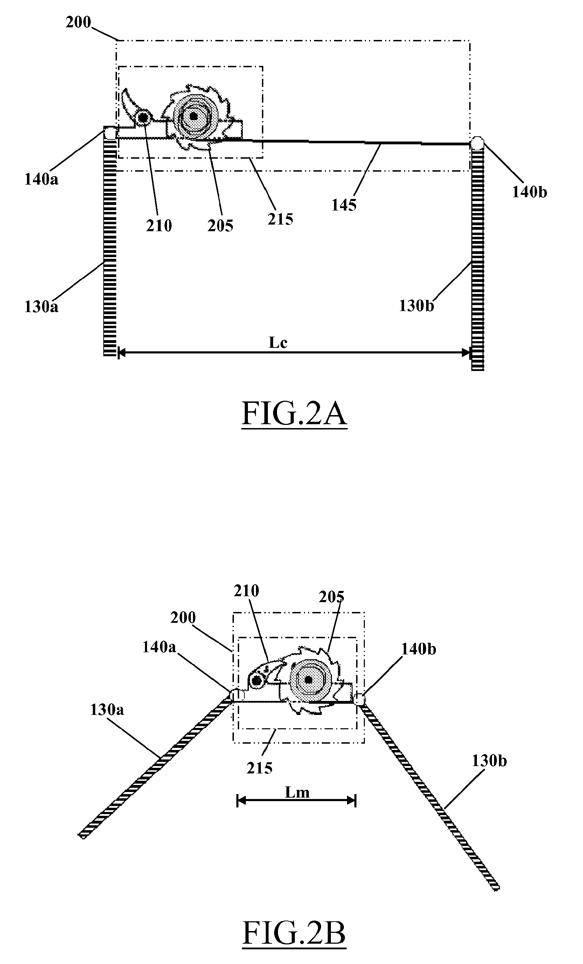

Turning now to FIGs.2A-2B, therein a top view of the pair of aerostatic modules 130a and 130b, including switching means 200, is shown. In the example shown in the figures the switching means 200 further includes coupling means - in addition to the coupling cable 145 - in particular, winding means and blocking means such as a sprocket with a reel 205 and a spout 210, respectively, included in a motorized ratchet arrangement 215. In the embodiment of the invention depicted in the figures the ratchet arrangement 215 is located at the edge of the coupling edge 140a of the aerostatic module 130a. The switching means 200 further includes sensors, such as a proximity sensor (embedded in the ratchet arrangement 215) capable of signalling to actuator means, for example, to an electronic control unit (embedded in the ratchet arrangement 215), the reaching of a minimum distance Lm between the aerostatic modules 130a and 130b.

Referring now to FIGs.1A-1D and2A-2B, the operation of the generator 100 will be described in the following. During operation, the aerostatic modules 130a and 130b are left free to float in the air up to the working altitude at a distance Ls from the converter 110 when they are in a passive condition (as shown in FIG.1A) - where no electric energy is generated by the generator 100 - while remaining connected to the converter 110 through the cable 120 secured to the shaft 115. In particular, a portion of the cable 120 remains wound around the shaft 115. In the passive condition, the spout 210 leaves the sprocket 215 free to unwind the coupling cable 145 allowing the aerostatic modules 130a and 130b to move independently to each other within a distance Lc determined by a length of the coupling cable 145 being unwound.

While the generator 100 is in the passive condition, the aerostatic modules 130a and 130b are directed in such a way to have the main surfaces 132 oriented along the direction of the wind 105 to provide a minimum surface of resistance to the wind 105 *(i.e.,* the system enters a minimum energy condition according to the thermodynamics principles). At the same time, turbulence generated by the interaction between the wind 105 and the main surfaces 132 (according to the principles of fluid dynamics) may bring the aerostatic modules 130a and 130b to approach each other.

When the aerostatic modules 130a and 130b are close together within the minimum distance Lm the proximity sensor sends a signal to the electronic control unit, which actuates the ratchet arrangement 215 such as to rotate the sprocket 205 to wind the coupling cable 145 and the spout 210 to lock the sprocket 205 in order to maintain the coupling cable in a wound condition. In the wound condition the aerostatic modules 130a and 130b have the coupling edges 140a and 140b coupled and/or maintained at the minimum distance Lm.

It is important to note that the activation of the ratchet arrangement 215 to wind the coupling cable upon the reaching of the minimum Lm distance between the two aerostatic modules 130a and 130b requires a small amount of power to be performed, since when the aerostatic modules 130a and 130b are at the minimum distance Lm the coupling cable is not stretched by forces opposite the winding movement. Therefore, it is possible to provide the energy required to operate the switching system via a photovoltaic system installed on at least one of the aerostatic modules 130a and 130b without excessively weighting down the latter and without the need of using a power cable as in the prior art.

When the coupling edges 140a and 140b (at the minimum distance Lm) reach the distance Ls from the converter 110, the generator enters an active condition. The aerostatic modules 130a and 130b, bounded together by the switching means 200, are arranged with the main faces 137₁ and 137₂ transversal to the direction of the wind 105 due to the latter. In this way, the main faces 137₁ of the aerostatic modules 130a and 130b form a resistance surface 150, of area substantially equal to the sum of the surface of the two main faces 137₁. The resistance surface 150 provides resistance to the flow of the wind 105 hence the aerostatic modules 130a and 130b are blown by the wind 105, in the manner of a sail or of a kite. The movement of the resistance surface 150 causes the unwinding of the portion of the connecting cable 120 wound around the shaft 115, and a subsequent rotation of the latter. In particular, the rotation of the shaft 115 activates the converter 110, which produces electric energy. In more detail, the converter 110 converts a portion of the kinetic energy transferred from the wind 105 to the resistance surface 150 and then through the cable 120 to the shaft 115 into electric energy. A remaining part of the kinetic energy will be irretrievably lost as entropy (*e.g*., in the form of heat) according to the thermodynamics principles.

The connection cable 120 is completely unwound by the movement away of the aerostatic modules 130a and 130b until in the active condition a distance Lf from the converter 110 is reached. Consequently, the converter 110 sends an RF signal to the electronic control unit embedded in the ratchet arrangement 215 for imposing the release of the spout 210. In this way, the coupling cable 145 is released and it is then free to unwind again. As a result, the resistance surface 150 disappears and the aerostatic modules 130a and 130b are free to take position again with their main faces 137₁ and 137₂ parallel to the direction of the wind 105, by switching the generator 100 from the active condition to the passive condition.

Subsequently, the winding motor of the converter 110 uses a portion of the electric energy produced during the active condition to rewind the connecting cable 120 until the aerostatic modules 130a and 130b are brought back at the distance Ls from the converter 110. In particular, the electric energy used to bring back the aerostatic modules 130a and 130b to the distance Ls is low, since the latter are oriented so as to provide a minimum surface of resistance to the wind 105 and then a minimum resistance thereto.

Consequently, there will be again a switch from the passive to active condition when the aerostatic modules 130a and 130b will be moved close together within the distance Lm by the wind 105 and the operation described above will be repeated. The generator 100 thus cyclically switches between the passive condition (in which there is a low power consumption required to rewind the cable 120) and the active condition (in which the converter generates electric energy from the kinetic energy supplied by the wind 105).

The net electric energy supplied by the generator 100 during an operation period is equal to the difference between the electric energy produced during the active condition and the electric energy dissipated during the passive condition to rewind the cable 120. The net electric energy may be supplied to batteries or directly to a power grid.

In the case of a deployment of the generator 100 in areas with particularly turbulent winds, and/or to achieve a greater reliability, stabilizing modules (not shown in the figures) on the aerostatic modules 130a and 130b, such as a proper fletching, may be provided. In this way the aerostatic modules 130a and 130b are less prone to rotation and then the connection cable 120 and in particular the terminal segments 125a-125d are less subject to entanglement.

It is important to note that the above described generator 100 requires very low maintenance, thus allowing having long exercise periods and a very low cost of the generated electric energy.

Naturally, in order to satisfy local and specific requirements, a person skilled in the art may apply to the solution described above many logical and/or physical modifications and alterations. More specifically, although this solution has been described with a certain degree of particularity with reference to one or more embodiments thereof, it should be understood that various omissions, substitutions and changes in the form and details as well as other embodiments are possible. Particularly, different embodiments of the invention may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the disclosed solution may be incorporated in any other embodiment as a matter of general design choice.

For example, similar considerations apply if the system for generating energy has a different structure or includes equivalent components, or it has other operative characteristics. In any case, every component thereof may be separated into more elements, or two or more components may be combined together into a singe element; moreover, each component may be replicated to support the execution of the corresponding operations in parallel. It is also pointed out that (unless specified otherwise) any interaction between different components generally does not need to be continuous, and it may be either direct or indirect through one or more intermediaries. For example, the same system may have a double section structure.

Nothing prevents the aerostatic modules having a structure different from a panel, such as a hollow hemisphere. Furthermore, the shape may differ from the rectangular, for example, the aerostatic modules may have a diamond shape.

The connection cable may be connected to the aerostatic modules in a different position, not necessarily opposite the coupling edge.

Nothing prohibits providing a system for generating energy in which the blocking means blocks the coupling cable in the active condition and releases it in the active condition, such as when the winding means includes a spring-loaded device to rewind the coupling cable.

The switch from the passive condition to the active condition may be made by an appropriate radio command regardless of the distance between the aerostatic modules, as well as the power supplying of the switching means may be provided by batteries or by radio-frequency.

## Claims

1. A system for generating energy (100) from a fluid flow (105), the system including:
energy conversion means (110),
aerostatic means (130a, 130b) switchable between an active condition for being carried away from the energy conversion means by the fluid flow, and a passive condition in which said carrying away is minimized,
connection means (120) for connecting the aerostatic means to the energy conversion means, the energy conversion means converting part of a kinetic energy supplied to the aerostatic means by the fluid flow into said energy when the aerostatic means in the active condition is carried away from the energy conversion means,
return means (110) for returning the aerostatic means in the passive condition towards the energy conversion means, and
switching means (200) for switching the aerostatic means from the passive condition to the active condition and from the active condition to the passive condition in response to the reaching a first distance (Ls) and a second distance (Lf), respectively, of the aerostatic means from the energy conversion means, the second distance being greater than the first distance,
**characterized in that**
the aerostatic means includes at least one pair of aerostatic modules (130a, 130b), the switching means including coupling means (145, 215) for coupling the aerostatic modules of each pair for forming a first resistance surface (150) for the fluid flow in the active condition and for decoupling the aerostatic modules of each pair for forming a second resistance surface for the fluid flow smaller than the first surface in the passive condition.

2. The system for generating energy according to claim 1, wherein each module (130a, 130b) has a substantially panel-shaped structure, the coupling means (145, 215) including means (145, 205 210) for coupling the aerostatic modules of each pair by constraining the aerostatic modules in correspondence to coupling edges (140a, 140b) thereof and for decoupling the aerostatic modules of each pair by un-constraining the aerostatic modules.

3. The system for generating energy according to claim 2, wherein each aerostatic module (130a, 130b) has a substantially rectangular shape.

4. The system for generating energy according to claim 2 or 3, wherein the connection means is connected to each aerostatic module (130a, 130b) at a connecting edge thereof opposite the coupling edge.

5. The system for generating energy according to any one of claims 2 to 4, wherein for each pair of aerostatic modules (130a, 130b) the coupling means (145, 205 210) includes at least one coupling cable (145) connected between the aerostatic modules in correspondence to the coupling edges (140a, 140b) thereof, winding means (205) for winding the at least one coupling cable, blocking means (210) for blocking the at least one coupling cable, and actuator means (215), in the passive condition the actuator means disabling the blocking means for allowing the coupling edges of the aerostatic modules to separate from each other thereby unwinding the at least one coupling cable up to a maximum distance (Lc) defined by the at least one coupling cable, and in the active condition the actuator means enabling the winding means for bringing the at least one coupling cable to a wound condition and enabling the blocking means for blocking the at least one coupling cable in the wound condition, the at least one cable blocked in the wound condition constraining the aerostatic modules in correspondence to the coupling edges thereof.

6. The system for generating energy according to claim 5, wherein the winding means (205) includes a motor for winding the at least one coupling cable.

7. The system for generating energy according to claim 6, wherein the switching means (200) further includes sensors means for detecting the reaching of a minimum distance (Lm) between the aerostatic modules, the switching of the aerostatic means (130a, 130b) from the passive condition to the active condition being conditioned by the detection of the minimum distance.

8. The system for generating energy according to any one of claims 1 to 7, wherein each pair of aerostatic modules (130a, 130b) includes further energy conversion means for powering the switching means.

9. The system for generating energy according to claim 8, wherein the further energy conversion means includes a photovoltaic system.

10. The system for generating energy according to any of the preceding claims, wherein each aerostatic module (130a, 130b) further includes stabilizer means for stabilizing the aerostatic module in the passive condition.

11. A method for generating energy from a fluid flow (105), the method including the steps of:
switching aerostatic means (130a, 130b) to an active condition for being carried away from energy conversion means (110) connected thereto by the fluid flow in response to the reaching a first distance (Ls) of the aerostatic means from the energy conversion means,
converting part of a kinetic energy supplied to the aerostatic means by the fluid flow into said energy by the energy conversion means when the aerostatic means in the active condition is carried away from the energy conversion means,
switching the aerostatic means to a passive condition in which said carrying away is minimized in response to the reaching a second distance (Lf) of the aerostatic means from the energy conversion means, the second distance being greater than the first distance, and
returning the aerostatic means in the passive condition towards the energy conversion means,
**characterized in that**
the aerostatic means includes at least one pair of aerostatic modules (130a, 130b), the step of switching the aerostatic means to the active condition includes coupling the aerostatic modules of each pair for forming a first resistance surface (150) for the fluid flow and the step of switching the aerostatic means to the passive condition including decoupling the aerostatic modules of each pair for forming a second resistance surface for the fluid flow smaller than the first surface.
